# EUROPEAN PATENT SPECIFICATION

(11) **EP 2 019 845 B1**
(45) Date of publication and mention of the grant of the patent: **07.09.2011**
(21) Application number: 07795244.8
(22) Date of filing: 23.05.2007
(51) Int. Cl.: C08F 255/02, C09J 151/06, C08L 51/06, B29C 47/00, C08F 255/00

(54) **GRAFTED POLYOLEFINS USEFUL AS METAL ADHESION PROMOTERS**
ALS METALLHAFTVERSTÄRKER VERWENDBARE GEPFROPFTE POLYOLEFINE
POLYOLÉFINES FONCTIONNELLES UTILES COMME PROMOTEURS D'ADHÉRENCE SUR MÉTAUX

(30) Priority: 25.05.2006 US 809041 P; 22.09.2006 US 846668 P; 18.05.2007 US 804567
(43) Date of publication of application: 04.02.2009
(73) Proprietor: CHEMTURA CORPORATION, Middlebury, CT 06749 (US)
(72) Inventor: WEFER, John, M., Newtown, CT 06470 (US); SYED, Abuzar, Torrington, CT 06790 (US)
(74) Representative: Serravalle, Marco
(86) International application number: PCT/US2007/012309
(87) International publication number: WO 2007/139837

(56) References cited:
- EP-A- 0 725 090
- GB-A- 1 217 231
- GB-A- 1 393 692
- GB-A- 1 406 942
- US-A- 3 830 888
- US-A- 3 862 265
- US-A- 3 953 655
- US-A- 4 382 128

## Description

### BACKGROUND OF THE INVENTION

### 1. Field of the Invention

The present invention relates to materials comprising functional polyolefins, such as polypropylene grafted with acrylic acid, that improve the adhesion of polypropylene-based polyolefins to metal, and to a method for producing them

### 2. Description of Related Art

There are a number of commercial applications where polyolefins are required to adhere to metal surfaces. Examples of these types of application include pipe coating, powder coating, and overmolding of a polyolefin onto a metal insert. However, owing to the non-polar nature of polyolefins, these materials do not adhere well to metals. A functionalized polyolefin having polar groups is sometimes used as a polyolefin additive to improve the metal-polyolefin adhesion. Examples of such polar groups include maleic anhydride and acrylic acid.

There are other instances where it is desired to adhere a polyolefin to a non-metallic polar material, such as wood or a polar plastic. In these cases, an additive that is a polyolefin functionalized with acrylic acid or maleic anhydride can improve the adhesion.

The key requirement for these adhesion promoters is that they be compatible with the polyolefin and that during processing they migrate to the polyolefin-metal interface. When the adhesion promoter is at the interface, it is then able to interact with and bond to the metal surface.

Polypropylene grafted with acrylic acid (PP-g-AA) is an example of an adhesion promoter used to improve the bond between polypropylene and metal and between polypropylene-containing thermoplastic elastomers and metal. Commercial PP-g-AA products are available from Chemtura Corporation sold under the trademarks Polybond^{®} 1001 and Polybond 1002. These materials improve the adhesion of polypropylene-based polyolefins to metals, but unfortunately have a relatively low melt flow, and thus are not very efficient at migrating to the polyolefin-metal interface during hot processing, such as overmolding onto a metal insert. Polybond 1001 and Polybond 1002 are polypropylenes grafted with about 6% acrylic acid having Melt Flow Rates of about 40 and 20 dg/min, respectively.

The most common production method for PP-g-AA is via reactive extrusion using an organic peroxide under controlled conditions. In this process, polypropylene is fed into an extruder, often a twin screw extruder, where it is melted. Acrylic acid and an organic peroxide are introduced into the melt, usually by injection. Polymerization and grafting of the acrylic acid takes place in the melt; the melt is usually fed past an extruder zone having a vacuum vent for removing unreacted acrylic acid and peroxide decomposition products, then further transported on the screw to a die where the material is extruded and pelletized. This general process is well-known in the art.

U.S.-A- 3,862,265 and related U.S.-A- 3,953,655 disclose modified polymers, particularly polyolefins, that are said to have improved flow and in some instances improved adhesion properties over that of a polymeric, e.g. polyolefin, base stock used as a starting material. The modified polymers are produced by a controlled reaction often involving degradation in an extruder, in which an initiator is injected under conditions of either maximum distribution or intensive mixing wherein appreciable rheological, e.g., molecular weight distribution, changes in the base polymer occur. In some embodiments, monomers are also grafted to the base stock during the degradation process. No examples are given for preparation of the type of high flow PP-g-AA polymers of the present invention. These patents disclose that certain grafted polyolefin polymers exhibit improved adhesion to polar polymers such as nylon or polyester and improved adhesion to metal nails, but there is no disclosure of the advantage of the high flow PP-g-AA polymers of the present invention when these polymers are desired to be used as additives to otherwise unfunctionalized polyolefins, or TPV's, to improve adhesion to metals or polar resins.

U.S.-A-6,448,343 discloses that the formation of thermoplastic vulcanizates may be accomplished with two polymers, wherein one polymer is grafted, or copolymerized with a carboxylic acid anhydride, which acid anhydride grafted polymer then is reacted with an amino silane, which reacts with the acid anhydride and then cross links.

### SUMMARY OF THE INVENTION

It is an object of the present invention to produce PP-g-AA materials having Melt Flow Rates up to 1000 dg/min., preferably in the range of from 100 to 500 dg/min.

Another object of the present invention is the development of an improved material for adhering polypropylene-based polyolefins to polar materials, particularly metals; however, the high melt flow PP-g-AA materials of the present invention are also useful as additives to improve the adhesion of polypropylene-based polyolefins to polar resins such as nylon, polyester, polycarbonate, and other polymers containing polar groups. For example, a thermoplastic vulcanizate (TPV) or other polypropylene-based polyolefin comprising the high melt flow PP-g-AA materials of the present invention will have improved adhesion to a polar resin substrate in an object produced by an overmolding process, compared to a TPV or other polypropylene-based polyolefin containing previously known materials.

Other uses for the high flow PP-g-AA materials of the invention include improved powder coating of metals, improved pipe coating of metallic pipe, improved fabrication into fibers, including those prepared via the Spunbond process, and improved ability to prepare aqueous emulsions.

More particularly, the present invention is directed to an improvement in a method for producing polypropylenes grafted with acrylic acid (PP-g-AA) by means of reactive extrusion using an organic peroxide wherein the improvement comprises feeding the acrylic acid and the peroxide into the extruder downstream from the point where the polypropylene is introduced;
wherein the acrylic acid is added at a feed rate greater than 11.4 kg (twenty-five pounds) per hour, the peroxide is added at a feed rate greater than two pounds per hour, the total weight is greater than 227 kg (500 pounds) per hour; and
whereby the PP-g-AA thus produced has a melt flow rate greater than 200 dg per minute.

In another aspect, the present invention is directed to a method for increasing the adhesion of polypropylene polymers to polar materials comprising employing as an adhesion promoter a polypropylene grafted with acrylic acid by means of reactive extrusion using an organic peroxide;
wherein the acrylic acid and the peroxide are fed into the extruder downstream from the point where the polypropylene is introduced;
wherein the acrylic acid is added at a feed rate greater than 11.4 kg (25 pounds) per hour, the peroxide is added at a feed rate greater than 0.9 kg (two pounds) per hour, the total weight is greater than 227 kg (500 pounds) per hour; and
whereby the propylene grafted with acrylic acid thus produced has a melt flow rate greater than 200 dg per minute.

In still another aspect, the present invention is directed to a method for increasing the adhesion of polypropylene to thermoplastic vulcanizates comprising employing as an adhesion promoter a polypropylene grafted with acrylic acid by means of reactive extrusion using an organic peroxide;
wherein the acrylic acid and the peroxide are fed into the extruder downstream from the point where the polypropylene is introduced;
wherein the acrylic acid is added at a feed rate greater than 11.4 kg (25 pounds) per hour, the peroxide is added at a feed rate greater than 0.9 kg (2 pounds) per hour, and the total rate is greater than 227 kg (500 pounds) per hour; and
whereby the PP-g-AA thus produced has a melt flow rate greater than 200 dg per minute.

### DESCRIPTION OF THE PREFERRED EMBODIMENTS

As noted above, the present invention is directed to an improvement in a method for producing polypropylenes grafted with acrylic acid by means of reactive extrusion using an organic peroxide wherein the improvement comprises feeding the acrylic acid and the peroxide into the extruder downstream from the point where the polypropylene is introduced;
wherein the acrylic acid is added at a feed rate greater than 11.4 kg (25 pounds) per hour, the peroxide is added at a feed rate greater than 0.9 kg (2 pounds) per hour, the total weight is greater than 227 kg (500 pounds) per hour; and
whereby the PP-g-AA thus produced has a melt flow rate greater than 200 dg per minute.

The process of this invention can produce very high melt flow PP-g-AA products by controlling the reaction variables in a reactive extrusion process, preferably employing a twin-screw extruder. The key variables comprise the peroxide feed rates, the acrylic acid feed rates, and the total rate.

In accordance with the present invention, the feed rate of the peroxide is greater than 0.9 kg (2 pounds) per hour; preferably in the range of from 0.9 to 9 kg (2 to 20 pounds) per hour; more preferably, from1.6 to 6.8 kg (4 to 15 pounds) per hour. The feed rate of the acrylic acid is greater than 11.4 kg (25 pounds) per hour; preferably in the range of from 11.4 to 114 kg (25 to 250 pounds) per hour; more preferably, from 22.7 to 68.2 kg (50 to 150 pounds) per hour. The total rate is greater than 227 kg (500 pounds) per hour, preferably in the range of from 227 to 2273 Kg (500 to 5000 pounds) per hour, more preferably in the range of 454 to 1364 kg (1000 to 3000 pounds) per hour. Total rates over 2273 kg (5000 pounds) per hour can be achieved provided the extruder is sized accordingly and the acrylic acid and peroxide feed rates are also proportionally increased.

The acrylic acid employed in the practice of the present invention is preferably glacial acrylic acid.

The peroxides that can be used in the present invention are of a wide variety. The preferred peroxide is 2,5-dimethyl-2,5-di(t-butylperoxy)hexane (Luperox 101, Luperox GmbH). Other peroxides that can be used include dicumyl peroxide, t-butyl cumyl t-butyl cumyl peroxide, α,α'-bis (t-butyl peroxy) diisopropyl-benzene, di-t-butyl peroxide, 2,5-dimethyl-2,5-di(t-butyl peroxy)-hexyne-3, diisopropyl peroxide, dilauryl peroxide, 3,3,5-trimethyl 1,1-di(tert-butyl peroxy)cylohexane, t-butyl hydrogen peroxide, t-amyl hydrogen peroxide, cumyl hydrogen peroxide, acetyl peroxide, lauroyl peroxide, benzoyl peroxide, and ethyl peroxybenzoate.

The polypropylene used to make the graft copolymers used in the practice of the present invention may be a homopolymer or a copolymer of polypropylene having a melt flow rate of 0.1-100 dg/min (230°C, 2.16 Kg).

The acrylic acid concentration in the PP-g-AA materials of the present invention is typically in the range of from three to ten weight percent. Preferably, the acrylic acid is present in a range of from four to eight weight percent; more preferably, from five to eight weight percent.

The high melt flow PP-g-AA materials of the present invention are useful for adhering propylene polymers, e.g., polypropylene-based polyolefins, to polar materials, particularly metals, such as aluminum, copper, and stainless steel and polar resins, such as nylon, polyester, polycarbonate, and other polymers containing polar groups. For example, a thermoplastic vulcanizate (TPV) or other polypropylene-based polyolefin containing the high melt flow PP-g-AA materials of the present invention will have improved adhesion to a polar resin substrate in an object produced by an overmolding process, compared to a TPV or other polypropylene-based polyolefin containing previously known materials.

The following description is provided for those who may be unfamiliar with the term "TPV."

Thermoplastic elastomers (TPEs) exhibit the functional properties of conventional thermoset rubbers, yet they can be melted repeatedly and are therefore suitable for processing in conventional thermoplastic fabrication equipment. The majority of TPEs comprise two phases, one comprising a rubber material (elastomer) that is insoluble in the other, and a flowable thermoplastic material. The rubber material is present as a dispersed phase and the flowable thermoplastic material is the continuous phase.

Although it is in principle not necessary to crosslink the rubber in a TPE, it has proven efficient using crosslinking techniques to obtain better chemical resistance, mechanical properties and a better control of phase separation. Such TPE compositions, where a crosslinking reaction and process is used to achieve phase separation into divided domains, are called Thermoplastic Vulcanizates (TPV). To keep their thermoplastic character, it is essential that only the rubber phase be crosslinked. For an extensive and detailed description and review of TPV technology, see for instance, S. Abdou-Sabet, R. C. Puydak and C. P. Rader in Rubber Chemistry and Technology, vol.69, pp 476-493, +1996.

The selection of a crosslinking process and chemicals is governed by processing requirements, e.g., reaction rate at the processing temperature; compatibility with the elastomer; side reactions with the thermoplastic; efficiency (number of crosslinks generated by each molecule of crosslinker); absence of undesired reactions; toxicity and hazards; color; and odor.

One example of such TPVs is EPDM/PP described in U.S. Patent No. 3,130,535. EPDM and polypropylene are mixed intimately in an internal mixer, and a peroxide is added to crosslink the EPDM. Excess peroxide and/or excessively high processing temperature and/or excessively reactive polymers will cause degradation of the polypropylene phase and/or scorch. In contrast, an insufficient amount of peroxide and/or a too low processing temperature and/or a poorly reactive EPDM will cause insufficient crosslinking.

The PP-g-AA materials of the present invention are useful for improving the adhesion of polypropylene polymers to polar materials. The term "polypropylene polymer" as used herein means not only a polypropylene homopolymer, but also a polymer predominantly comprising propylene, particularly a polymer comprising not less than 50% by weight, preferably not less than 80% by weight, of propylene. As examples of the latter polymer, there may be mentioned random copolymers, e.g., propylene-ethylene random copolymer, alternating or segmented copolymers, block copolymers, e.g., propylene-ethylene block copolymer, polymer blends of said polypropylene resin with one or more other thermoplastic resins, such as high-density polyethylene, polybutene-1, poly-4-methylpentene-1, and the like.

The terms "polypropylene homopolymer" and "polypropylene polymer" are also intended to include long chain branched polypropylene.

These polypropylene polymers can be any of those prepared by various methods, e.g., catalytic polymerization using a catalyst that normally contains one or more than one metal of groups IVb, Vb, VIb, or VIII of the Periodic Table. These metals usually comprise at least one ligand, typically oxides, halides, alcoholates, esters, ethers, amines, alkyls, alkenyls, and/or aryls that may be either π or σ-coordinated. These metal complexes may be in the free form or fixed on substrates, typically on activated magnesium chloride, titanium(III) chloride, alumina, or silicon oxide. These catalysts may be soluble or insoluble in the polymerization medium. The catalysts can be used by themselves in the polymerization or further activators may be used, typically metal, alkyls, metal hydrides, metal alkyl halides, metal alkyl oxides, or metal alkyloxanes, said metals being elements of groups Ia, IIa, and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene, or single site catalysts (SSC).

These polypropylenes can be polypropylene random copolymers, alternating or segmented copolymers, or block copolymers comprising one or more co-monomers selected from the group consisting of ethylene, C₄-C₂₀-α-olefin, vinylcyclohexane, vinylcyclohexene, C₄-C₂₀ alkandiene, C₅-C₁₂ cycloalkandiene and norbornene derivatives; the total amount of propylene and the comonomer(s) being 100%.

Further examples of propylene polymers whose adhesion to polar materials can be improved by the PP-g-AA of the present invention include, propylene/isobutylene copolymer, propylene/butadiene copolymer, propylene/cycloolefin copolymer, terpolymers of propylene with ethylene and a diene such as hexadiene, dicyclopentadiene, or ethylidene-norbornene; propylene/1-olefin copolymers where the 1-olefin is generated *in situ;* and propylene/carbon monoxide copolymers.

Other examples include blends of polypropylene with propylene/ethylene copolymers, propylene/butylene copolymers, polyethylene, e.g. HDPE or LDPE; polybutene, polyisobutylene, poly-4-methylpentene, or alternating or random polyalkylene/carbon monoxide copolymers. These blends preferably comprises at least 50% by weight, relative to the weight of the total blend, of polypropylene.

When blended with polypropylene polymers, the PP-g-AA will normally be present in a range of from about 2 to about 30 weight percent, based on the total weight of the polypropylene polymer and PP-g-AA. Preferably, the PP-g-AA will be present in a range of from about 5 to about 25 weight percent; more preferably, from about 10 to about 20 weight percent.

### EXAMPLES

Process conditions and product properties are given in the Table 1, below. The resin is a polypropylene homopolymer (MFR 4 dg/min at 230°C, 2.16 Kg). The peroxide used is 2,5-dimethyl-2,5-di(t-butylperoxy)hexane (Luperox 101). The acrylic acid is glacial acrylic acid. The extruder is a 92mm Werner & Pfleiderer twin-screw ZSK, 9-barrel configuration (3240mm). The polypropylene addiction is in barrel 1. The peroxide and acrylic acid injections are in barrel 4. The vacuum vents are at barrels 7 and 8. Barrel temperatures (zones 1-9) are 149/171/188/171/177/177/177/182/182 °C (300 /340 /370 /340 /350 /350 /350 /360 /360 °F), respectively. The die is set at 174 °C (345°F).

**Table 1**

| **Process Conditions/Product Properties** | | | | | | | |
|---|---|---|---|---|---|---|---|
| | AA feedrate kg(lb)/hr | Peroxide feedrate kg(lb)/hr | Resin feedrate kg(lb)/h | Extruder RPM | Extruder torque % | Product AA % | Product MFR dg/min |
| INV-1 | 27.2 | 1.70 | 635 | 300 | 58 | 5.58 | 195 |
| | (60) | (3.75) | (1400) | | | | |
| INV-2 | 27.2 | 2.04 | 635 | 300 | 58 | 5.87 | 236 |
| | (60) | (4.50) | (1400) | | | | |
| INV-3 | 27.2 | 2.28 | 635 | 400 | 42 | 6.06 | 238 |
| | (60) | (5.00) | (1400) | | | | |
| INV-4 | 31.8 | 2.72 | 635 | 400 | 42 | 6.18 | 424 |
| | (70) | (6.00) | (1400) | | | | |

INV-1, INV-2, INV-3, and INV-4 in Table 1 are examples in accordance with the present invention. Polybond 1001 (MFR 40 dg/min.) is used for comparison in the examples below.

### Adhesion of PP Homopolymer, PP Copolymer, and TPV to Metal Surfaces

Polybond 1001 and INV-4 (10 and 20%) were blended with polypropylene homopolymers, polypropylene copolymers, and TPV and compounded using a 30 mm ZSK extruder. The compounds were compression molded into films having a thickness of 7-10 mils. Films were cut into 2.5 cm (one inch) wide strips and compression laminated onto two aluminum and stainless steel strips in a heat sealer at about 400°C for 5-30 seconds. The 180°C peel strengths were measured by ASTM D-429 and the data were reported as kg/m (pounds per linear inch).

The laminated strips of the formulated product and aluminum or stainless steel were tested for peel strength. The control samples did not have any adhesion promoter whereas the test samples each had 10 or 20% of POLYBOND 1001 (comparative examples) or INV-4 (invention examples).

### Adhesion of TPV onto PP Copolymer (Profax SG 702)

For adhesion of TPV to polypropylene via injection overmolding, the samples were dried at 90EC for three hours prior to molding. The TPV compounds were injection molded into a test bar (15.2 cm x 5.7 cm x 0.2 cm (6 inches x 2.25 inches x 0.075 inch)) on a BOY 15S injection molder. The test specimens were cut into halves and inserted into the mold cavity away from the gate of a Negri Bossi V-17 - 110 FA injection molding machine and polypropylene (Profax SG 702) was injection molded to fill the mold at 149-166°C (300-330°F).

The molded samples were cut into test pieces (15.2 cm x 1.3 cm x 0.2 cm (6 inches x 0.5 inch x 0.075 inch) and the samples were tested at a speed of two inches/minute for adhesion and reported as peak load N/m (lb force/linear inch).

The blend formulations comprised the following ingredients. The blend compositions and the peel strength data for polypropylene polymer/metal and TPV/metal are tabulated in Table 2.

Polypropylene homopolymer formulations contained Sunoco PP D040W6 (MFR 4 dg/min) from Sunoco Chemicals (80, 90 and 100%), Polybond 1001 or INV-4 (0, 10, 20%) and Naugard B 25 process stabilizer (0.2%) from Chemtura Corporation. Polypropylene copolymer formulations contained Hifax KA 805 A, a heterophasic polypropylene copolymer from Basell (80, 90 and 100%), Polybond 1001 or INV-4 (0, 10, 20%) and Naugard B 25 process stabilizer (0.2%) from Chemtura Corporation. The TPV based formulations contained a polypropylene-based TPV from Teknor Apex, Uniprene 7100 (hardness 50 and 87) (80, 90, and 100%), Polybond 1001 or INV-4 (0, 10, 20%) and Naugard B 25 process stabilizer (0.2%) from Chemtura Corporation.

### Polypropylene Homopolymer and TPV Adhesion

The PP homopolymer from Sunoco (D040W6, MFR 4 dg/min) was compression molded into films having a thickness of 7-10 mils. These films were heat sealed onto films made from the formulated TPVs and peel strengths were measured as per ASTM D-429 and the data reported in kg/m (pound per linear inch).

### Results: Adhesion with Metal

The polypropylene homopolymer without adhesion promoter showed no adhesion to any metal. The peel strength with aluminum, improved from zero to 155 N/m (0.66 lb) (10%) and from 17.5 to 250 N/m (0.1 to 1.43 lb) (20%) when Polybond 1001 was replaced by the adhesion promoter of the present invention. In the case of stainless steel, there was no adhesion from Polybond 1001 formulated product, but with INV-4 formulated products, the peel strengths improved to 54.3 and 284 N/m (0.31 and 1.62 lb) (10 and 20%).

In the case of polypropylene copolymer formulations, there was no adhesion with aluminum or stainless steel without the adhesion promoter, and the adhesion was similar with both Polybond 1001 and INV-4.

The TPV formulations having the high flow adhesion promoter of the present invention showed much improved adhesion compared to Polybond 1001 at both 10 and 20% levels. Without the adhesion promoter, TPV showed no adhesion to either aluminum or stainless steel.

The peel strength was 20 times higher at 10% using the INV-4 adhesion promoter over Polybond 1001 and, similarly, it was above 4-7 times higher at 20%. This result is very significant because the amount of adhesion promoter required to achieve similar adhesion will be significantly reduced or higher adhesion can be obtained at the same adhesion promoter levels.

The data are tabulated in the Table 2 below.

### Results: Adhesion in Homo PP/TPV

In this case, the adhesion was very good good with samples formulated with both Polybond 1001 and INV-4. The films could not be peeled owing to good adhesion and cohesive failure that occurred during the test, i.e., the film broke before peeling. The data shown represent the maximum at the time of failure (breakage). The performance of Polybond 1001 and INV-4 can not be differentiated based on the adhesion data in the table; however, adhesion was strong as shown by the test failure.

**Table 2**

| **Blend Compositions and Peel Strengths Data** | | | | | |
|---|---|---|---|---|---|
| **Homo PP (4 MFR)/Metal Adhesion** | | | | | |
| | **Control** | **Polybond 1001** | | **INV-4** | |
| **Addition level (%)** | **No additive** | **10** | **20** | **10** | **20** |

| **Peel Strength (N/m (lb.) pull peak)** | | | | | |
|---|---|---|---|---|---|
| **Aluminum** | **No adhesion** | **No adhesion** | **17.5 (0.1)** | **115 (0.66)** | **250 (1.43)** |
| **Stainless Steel** | **No adhesion** | **No adhesion** | **No adhesion** | **543 (0.31)** | **284 (1.62)** |
| | | | | | |

| **Heterophasic Copolymer PP (Hifax 805A)/Metal Adhesion** | | | | | |
|---|---|---|---|---|---|
| | **Control** | **Polybond 1001** | | **INV-4** | |
| **Addition level (%)** | **No additive** | **10** | **20** | **10** | **20** |

| | **Peel Strength (N/m (lb.) pull peak)** | | | | |
|---|---|---|---|---|---|
| **Aluminum** | **No adhesion** | **1541 (8.8)** | **6.72 (3.84)** | **1392 (7.95)** | **1214 (6.93)** |
| **Stainless Steel** | **No adhesion** | **1518 (8.67)** | **1438 (8.21)** | **1499 (8.56)** | **1473 (8.41)** |
| | | | | | |

| **Uniprene 7100, Hardness 50/Metal Adhesion** | | | | | |
|---|---|---|---|---|---|
| | **Control** | **Polybond 1001** | | **INV-4** | |
| **Addition level (%)** | **No additive** | **10** | **20** | **10** | **20** |

| | **Peel Strength (N/m (lb.) pull peak)** | | | | |
|---|---|---|---|---|---|
| **Aluminum** | **No adhesion** | **no test** | **699 (3.99)** | **590 (3.37)** | **2154 (12.3)** |
| **Stainless Steel** | **No adhesion** | **no test** | **340 (1.94)** | **489 (2.79)** | **2585 (14.76)** |
| | | | | | |

| **Uniprene 7100, Hardness 87/Metal Adhesion** | | | | | |
|---|---|---|---|---|---|
| | **Control** | **Polybond 1001** | | **INV-4** | |
| **Addition level (%)** | **No additive** | **10** | **20** | **10** | **20** |
| | **Peel Strength (N/m (lb.) pull peak)** | | | | |
| **Aluminum** | **No adhesion** | **91.1 (0.52)** | **660 (3.77)** | **1821 (10.4)** | **2609 (14.9)** |
| **Stainless Steel** | **No adhesion** | **70.58 (0.403)** | **553 (3.16)** | **1545 (8.82)** | **2194 (12.53)** |

**Table 3**

| **Homopolymer PP and TPV Peel Strength Data** | | | |
|---|---|---|---|
| **Polybond 1001** | | **INV-4** | |
| **10** | **20** | **10** | **20** |

| **Peel Strength (lb. pull peak) Uniprene 7100 hardness 50** | | | |
|---|---|---|---|
| **2119 (12.1)** | **1418 (8.1)** | **1629 (9.3)** | **1173 (6.7)** |

| **Peel Strength (lb. pull peak) Uniprene 7100 hardness 87** | | | |
|---|---|---|---|
| **676 (3.86)** | **653 (3.73)** | **679 (3.88)** | **679 (3.88)** |

### Adhesion of TPV to Polypropylene via Injection Overmolding

Injection overmolding of soft material, such as TPV, onto hard polymer substrates, such as polypropylene, nylon, PC, PMMA, and ABS, is becoming very common in order to provide a hard/soft combination across a wide range of consumer applications. However, the two polymers are required to adhere to each other and, thus, need a special grade of adhering TPV or an additive, which, when blended into the TPV, helps the adhesion to the rigid substrates.

Table 4 below shows the effect of INV-4 on the adhesion to polypropylene of two TPVs that differ in their softness. Initial data suggest that addition of both Polybond products improves the adhesion to some degree; however, INV-4 performs slightly better than Polybond 1001. The adhesion during the injection overmolding process depends on several factors and the process has not yet been optimized.

A possible explanation for the improved adhesion of TPV containing AA-g-PP to non-polar rigid polypropylene may be the presence of a diffusible, lower molecular weight polypropylene material at the interface, with the polar polyacrylic acid component minimally affecting adhesion as a discontinuous phase. This tends to be supported by the observation that the lower molecular weight material, INV-4, is more effective than Polybond 1001.

| **Table 4** | | | | | |
|---|---|---|---|---|---|
| **Adhesion of Modified TPV to Polypropylene via Injection Overmolding** | | | | | |
| | | | | | |
| **TPV 50 Shore D (Uniprene 7100)** | | | | | |
| | Control | Polybond 1001 | | INV-4 | |
| Addition level (%) | No additive | 10 | 20 | 10 | 20 |

| | **Peel Strength kN/m (PLI)** | | | | |
|---|---|---|---|---|---|
| Polypropylene | 9.37 (53.5) | 12.75 (72.8) | 16.08 (91.8) | 14.93 (85.5) | 17.86 (102) |
| | | | | | |

| **TPV 87 Shore A (Uniprene 7100)** | | | | | |
|---|---|---|---|---|---|
| | Control | Polybond 1001 | | INV-4 | |
| Addition level (%) | No additive | 10 | 20 | 10 | 20 |

| | **Peel Strength kN/m (PLI)** | | | | |
|---|---|---|---|---|---|
| Polypropylene | 4.83 (27.6) | 5.95 (34) | | 7.13(40.7) | 11 (63) |

## Claims

1. Polypropylene grafted with acrylic acid (PP-g-AA) wherein the polymer is obtainable by means of reactive extrusion using an organic peroxide, the process comprising:
feeding the acrylic acid and the peroxide into the extruder downstream from the point where the polypropylene is introduced;
wherein the acrylic acid is added at a feed rate greater than 11.4 kg (25 pounds) per hour, the peroxide is added at a feed rate greater than 0.91 kg (2 pounds) per hour, and the total rate is greater than 227 kg (500 pounds) per hour;
wherein the PP-g-AA has a melt flow rate at 230°C and 2.16 kg, greater than 200 dg per minute.

2. The polymer of claim 1 wherein the acrylic acid is added at a feed rate in the range of from 11.4 kg (25 pounds) to 114 kg (250 pounds) per hour and the total rate is 227 to 2273 kg/h (500 to 5000 pounds per hour), preferably at a feed rate in the range of from 22.7 to 68.2 kg/h (50 to 150 pounds per hour) and the total rate is 454 to 1364 kg/h (1000 to 3000 pounds per hour).

3. The polymer of claim 1 wherein the peroxide is added at a feed rate in the range of from 0.9 to 9 kg/h (2 to 20 pounds per hour) and the total rate is 227 to 2273 kg/h (500 to 5000 pounds per hour), preferably at a feed rate in the range of from 1.8 to 6.8 kg/h (4 to 15 pounds per hour) and the total rate is 454 to 1364 kg/h (1000 to 3000 pounds per hour).

4. The polymer of claims 1-3 wherein the peroxide is 2,5-dimethyl-2,5-di(t-butylperoxy)hexane.

5. A method for increasing the adhesion of polypropylene polymers to polar materials comprising employing as an adhesion promoter a polypropylene grafted with acrylic acid according to claims 1-4.

6. The method of claim 5 wherein the polar material is a metal.

7. The method of claim 6 wherein the metal is selected from the group consisting of aluminum, copper, and stainless steel.

8. The method of claim 5 wherein the polar material is a polymer containing polar groups.

9. The method of claim 8 wherein the polar material is selected from the group consisting of nylon, polycarbonate, and polyester.

10. A method for increasing the adhesion of polypropylene to thermoplastic vulcanizates comprising employing as an adhesion promoter a polypropylene grafted with acrylic acid according to claims 1-4.

## Patentansprüche

1. Mit Acrylsäure gepfropftes Polypropylen (PP-g-AA), worin das Polymer durch reaktive Extrusion unter Verwendung eines organischen Peroxids erhältlich ist, wobei das Verfahren enthält:
Zuführung der Acrylsäure und des Peroxids in den Extruder nachgeschaltet dem Punkt, wo das Polypropylen eingeführt wird;
wobei die Acrylsäure bei einer Zufuhrrate von größer als 11,4 kg (25 Pfund) pro Stunde zugegeben wird, das Peroxid bei einer Zufuhrrate von größer als 0,91 kg (2 Pfund) pro Stunde zugegeben wird und die Gesamtrate größer als 227 kg (500 Pfund) pro Stunde beträgt;
worin das PP-g-AA eine Schmelzflussrate bei 230°C und 2,16 kg von größer als 200 dg pro Minute aufweist.

2. Das Polymer des Anspruchs 1, worin die Acrylsäure bei einer Zufuhrrate im Bereich von 11,4 kg (25 Pfund) bis 114 kg (250 Pfund) pro Stunde hinzugefügt wird und die Gesamtrate 227 bis 2273 kg/h (500 bis 5000 Pfund pro Stunde) beträgt, vorzugsweise bei einer Zufuhrrate im Bereich von 22,7 bis 68,2 kg/h (50 bis 150 Pfund pro Stunde) und einer Gesamtrate von 454 bis 1364 kg/h (1000 bis 3000 Pfund pro Stunde).

3. Das Polymer des Anspruchs 1, worin das Peroxid bei einer Zufuhrrate im Bereich von 0,9 bis 9 kg/h (2 bis 20 Pfund pro Stunde) hinzugegeben wird und die Gesamtrate 227 bis 2273 kg/h (500 bis 5000 Pfund pro Stunde) beträgt, vorzugsweise bei einer Zufuhrrate im Bereich von 1,8 bis 6,8 kg/h (4 bis 15 Pfund pro Stunde) und einer Gesamtrate von 454 bis 1364 kg/h (1000 bis 3000 Pfund pro Stunde).

4. Das Polymer der Ansprüche 1-3, worin das Peroxid 2,5-Dimethyl-2,5-di(t-butylperoxy)hexan ist.

5. Eine Methode zur Erhöhung der Haftung von Polypropylenpolymeren an polaren Materialien enthaltend die Verwendung eines mit Acrylsäure gepfropften Polypropylens gemäß Ansprüchen 1 bis 4 als ein Haftverstärker.

6. Die Methode des Anspruchs 5, worin das polare Material ein Metall ist.

7. Die Methode des Anspruchs 6, worin das Metall aus der aus Aluminium, Kupfer und Edelstahl bestehenden Gruppe ausgewählt wird.

8. Die Methode des Anspruchs 5, worin das polare Material ein polare Gruppen enthaltendes Polymer ist.

9. Die Methode des Anspruchs 8, worin das polare Material aus der aus Nylon, Polycarbonat und Polyester bestehenden Gruppe ausgewählt wird.

10. Eine Methode zur Erhöhung der Haftung von Polypropylen an thermoplastische Vulkanisate enthaltend die Verwendung eines mit Acrylsäure gepfropften Polypropylens gemäß Ansprüchen 1 bis 4 als ein Haftverstärker.

## Revendications

1. Polypropylène greffé par de l'acide acrylique (PP-g-AA), dans lequel le polymère est susceptible d'être obtenu au moyen d'une extrusion réactive à l'aide d'un peroxyde organique, le procédé comprenant :
l'introduction de l'acide acrylique et du peroxyde dans l'extrudeuse en aval du point où le polypropylène est introduit ;
dans lequel l'acide acrylique est ajouté à une vitesse d'alimentation supérieure à 11,4 kg (25 livres) par heure,
le peroxyde est ajouté à une vitesse d'alimentation supérieure à 0,91 kg (2 livres) par heure, et la vitesse totale est supérieure à 277 kg (500 livres) par heure ;
dans lequel le PP-g-AA a un indice de fusion à 230°C et 2,16 kg, supérieur à 200 dg par minute.

2. Polymère selon la revendication 1, dans lequel l'acide acrylique est ajouté à une vitesse d'alimentation se situant dans la plage de 11,4 kg (25 livres) à 114 kg (250 livres) par heure et la vitesse totale est de 227 à 2 273 kg/h (500 à 5 000 livres par heure), de préférence à une vitesse d'alimentation se situant dans la plage de 22,7 à 68,2 kg/h (50 à 150 livres par heure) et la vitesse totale est de 454 à 1 364 kg/h (1 000 à 3 000 livres par heure).

3. Procédé selon la revendication 1, dans lequel le peroxyde est ajouté à une vitesse d'alimentation se situant dans la plage de 0,9 à 9 kg/h (2 à 20 livres par heure) et la vitesse totale est de 227 à 2 273 kg/h (500 à 5 000 livres par heure), de préférence à une vitesse d'alimentation se situant dans la plage de 1,8 à 6,8 kg/h (4 à 15 livres par heure) et la vitesse totale est de 454 à 1 364 kg/h) (1 000 à 3 000 livres par heure).

4. Procédé selon l'une des revendications 1 à 3, dans lequel le peroxyde est le 2,5-diméthyl-2,5-di(t-butylperoxy)hexane.

5. Procédé d'augmentation de l'adhésion de polypropylènes polymères à des matériaux polaires, comprenant l'emploi comme promoteur d'adhésion d'un polypropylène greffé par de l'acide acrylique selon l'une des revendications 1 à 4.

6. Procédé selon la revendication 5, dans lequel le matériau polaire est un métal.

7. Procédé selon la revendication 6, dans lequel le métal est choisi dans le groupe consistant en l'aluminium, le cuivre et l'acier inoxydable.

8. Procédé selon la revendication 5, dans lequel le matériau polaire est un polymère contenant des groupes polaires.

9. Procédé selon la revendication 8, dans lequel le matériau polaire est choisi dans le groupe constitué par le Nylon, le polycarbonate et le polyester.

10. Procédé d'augmentation de l'adhésion du polypropylène à des vulcanisats thermoplastiques, comprenant l'emploi comme promoteur d'adhésion d'un polypropylène greffé par de l'acide acrylique selon l'une des revendications 1 à 4.
